# EUROPEAN PATENT SPECIFICATION

(11) **EP 2 456 176 B1**
(45) Date of publication and mention of the grant of the patent: **04.10.2017**
(21) Application number: 11009102.2
(22) Date of filing: 16.11.2011
(51) Int. Cl.: H04M 1/02, H04M 1/60

(54) **Communication device**
Kommunikationsvorrichtung
Dispositif de communication

(30) Priority: 23.11.2010 SE 1001128
(43) Date of publication of application: 23.05.2012
(73) Proprietor: Hylte Jakt & Lantman AB, 31434 Hyltebruk (SE)
(72) Inventor: Svensson, Fredrik, 31391 Oskarström (SE)
(74) Representative: Bergenstråhle Group AB

(56) References cited:
- US-A1- 2004 198 425
- US-A1- 2007 004 464
- US-B1- 6 745 014
- US-B1- 7 720 234

## Description

### TECHNICAL FIELD

The present invention relates to a communication device comprising a cell- or mobile telephone and a hunting radio, both the mobile telephone and the hunting radio being provided with units for Bluetooth communication or other wireless communication, and a headset, which is provided with operating means for controlling both, the headset is equipped for Bluetooth communication or other wireless communication with both the mobile telephone and the hunting radio.

### BACKGROUND ART

In cell- or mobile telephones, it is previously known to employ Bluetooth technology, so that for example the mobile telephone proper may be fixed in a clip on the user, for example his belt, while a headset is worn in or at the ear of the user. A mobile telephone is designed for two-way communication, i.e. it is rehearsed to both transmit and receive simultaneously. In operation of a mobile telephone fitted with Bluetooth equipment, there is a button disposed on the headset which activates the mobile telephone; one button push at the start of a conversation and a second button push when the conversation is ended. No operation of the button is necessary during ongoing conversations.

A hunting radio is a communication radio which only permits communication in one direction at any time. This implies that transmission and reception cannot take place simultaneously. A communication radio is equipped with an operating button, a so-called "push to talk" button for activating the transmission function. This PTT button must be kept depressed throughout the entire time of transmission. As soon as the PTT button is released, the hunting radio reverts to receiver mode.

In many situations it is desirable to be able to use a hunting radio and a mobile telephone together without operational or convenience problems arising.

US 2004/198425 discloses switching between full-duplex and half-duplex communication, in order to save battery power. The communication system includes one or more communication devices, such as a radio. One single set of buttons is used for operation of all the communication devices.

US 6 745 014 discloses a communication system which includes a headset and an operation unit with buttons. The operation of the communication system takes place form the operation unit, not from the headset.

US 7 720 234 discloses a communications interface device, which can have a number of communication devices connected thereto, by way of sockets and leads. There is a single set of switches to select the audio input from different devices.

US 2007/004464 discloses a communications system which is connected to a half-duplex communication device, and which comprises a transmit switch assembly.

### PROBLEM STRUCTURE

The present invention has for its object to design the communication device intimated by way of introduction such that simultaneous and convenient use of both mobile telephone and hunting radio may be put into effect. The present invention further has for its object to design the communication device such that the hunting radio proper need not be accessed for operation during use. Finally, the present invention has for its object to design the communication device such that it will be flexible and versatile in use together with other accessories.

### SOLUTION

The objects forming the basis of the present invention will be attained if the communication device intimated by way of introduction is characterised in that the mobile telephone and the hunting radio are used simultaneously and that the operating means are comprise a first operating device for operating the hunting radio, and a second operating member for operating the mobile telephone.

### BRIEF DESCRIPTION OF THE ACCOMPANYING DRAWINGS

The present invention will now be described in greater detail hereinbelow, with reference to the accompanying Drawings. In the accompanying Drawings:
- Figs. 1-3: show examples of the use of the present invention;
- Fig. 4: shows, in front and side elevation, a part of a headset included in the device according to the present invention;
- Fig. 5: shows the components illustrated in Fig. 4 seen from the rear, the right-hand view in this figure showing a connecting member included in the main unit of the headset about to be removed from the main unit;
- Fig. 6: shows the headset without the connecting member according to Fig. 4 and, in the right-hand view, an alternative connecting member about to be secured in the main unit; and
- Fig. 7: showing the connecting members according to Figs. 4-5, seen in two different views.

### DESCRIPTION OF PREFERRED EMBODIMENT

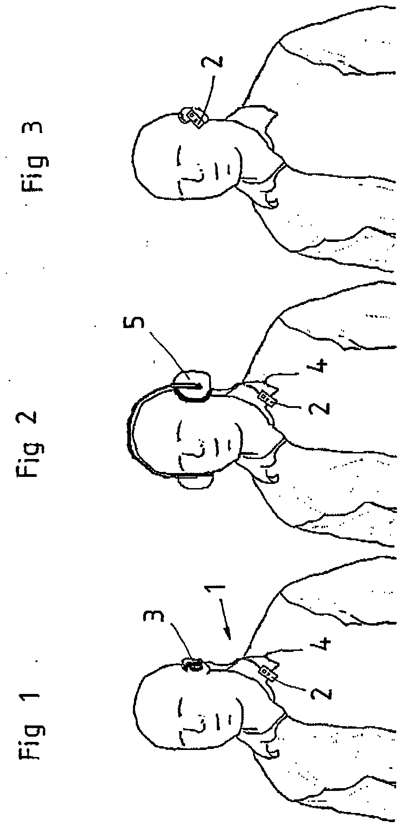

In Figs. 1-3, different examples are shown of detailed designs and fields of application for the device according to the present invention.

It will be apparent from Fig. 1 that a headset according to the present invention has a main unit 2 which is secured on the user's collar and, via a lead 4, being in communication with an ear bud 3 inserted in the acoustic meatus of the user for sound reproduction. While not being apparent from the Drawing, the main unit 2 of the headset 1 also includes a microphone for receiving sound from the user.

In Fig. 2, the main unit 2 of the headset is, via the lead 4, connected to a sound reproducing unit which is positioned in one or both of the ear protecting cups or hoods which are included in a hearing protector 5 worn by the user. Also in this case, the main unit 2 is fixed in the user's collar so close to the user's mouth that sound may be received.

In Fig. 3, the main unit 2 of the headset is secured direct by the intermediary of a sound reproducing element in the acoustic meatus of the user and is supported via the above mentioned sound reproducing element.

In all embodiments, it is assumed that the headset 1 communicates with the hunting radio and the mobile telephone by the intermediary of Bluetooth technology or other wireless technology. It should be emphasised that the technologies employed may differ between the hunting radio and the mobile telephone.

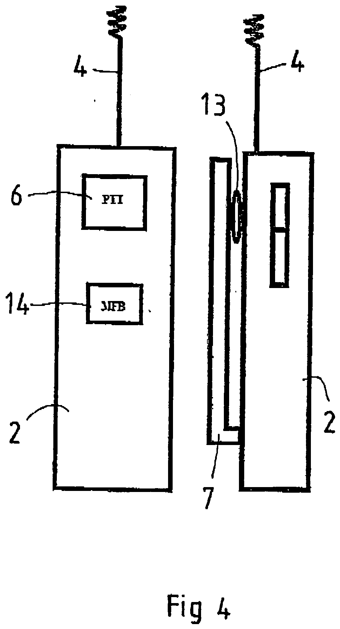

Fig. 4 shows, in two views, the main unit 2 of the headset, and it will be apparent from the left-hand half of the figure that the main unit has an operating device 6 in the form of a button which operates the hunting radio. This operating button 6 must be constantly held depressed during the time when transmission from the hunting radio takes place. On release of this button, the hunting radio is default connected to reception. The button is marked PPT, which means "push to talk".

It will further be apparent from the figure that the main unit 2 has a second operating member 14 for operating the mobile telephone. This operating member or button is marked MFB and has a function which complies with valid telephone standards.

As regards the PTT button, there is no applicable standard, but the signals generated by the PTT button 6 are transmitted to the hunting radio in wireless mode either via Bluetooth technology or other suitable standard.

It will further be apparent from the right-hand part figure that the main unit 2 has, on its rear side, a resilient fixing clip 7 for fixing the main unit to a suitable support, preferably an item of the user's clothing, so close to the user's mouth that sound may be picked up by the intermediary of a microphone disposed in the main unit 2.

In both of the part figures, there is provided the lead 4 mentioned by way of introduction which interconnects the main unit with a sound-reproducing element.

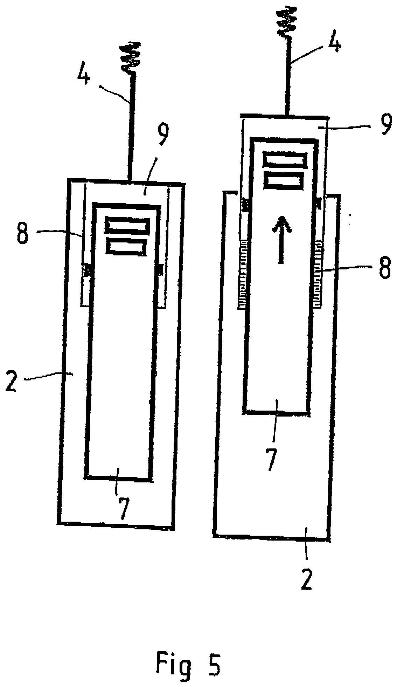

Fig. 5 shows the main unit 2 of the headset 1 seen from the rear compared with the left-hand part figure in Fig. 4. It will be apparent from the figure that the main unit 2 has a connection device 8 in which a connecting member 9 may be secured. It will further be apparent from the figure that the fixing clip 7 is disposed on the connecting member 9.

It the right-hand part of Fig. 5, it will be apparent that the connecting member 9 is about to be slid out of the connecting device 8 in order to be completely released and removed therefrom.

According to the present invention, there is a number of alternative connecting members 9 which may be differently equipped and which, via the lead 4, may be connected to different accessories such as the ear bud 3 mentioned by way of introduction or the hearing protector 5.

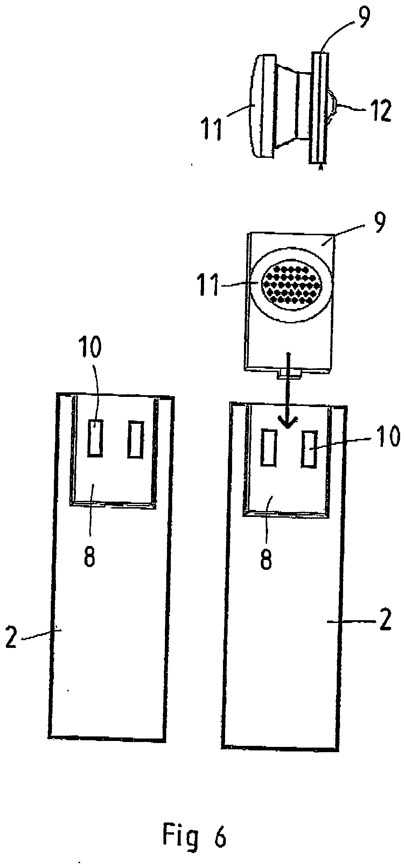

Fig. 6 shows the main unit 2 of the headset in the same views as in Fig. 5, the connecting member 9 having however being completely removed in the left-hand figure. In the connecting device 8, there is a contactor pair 10 which provide an analog sound signal to the sound reproducing element or elements included in the headset.

The right-hand figure shows an alternative connecting member 9 which per se has an integrated sound-reproducing element 11 in the form of a plug or ear bud which is designed for insertion in the acoustic meatus of a user. The design of the sound-reproducing element is such that the whole of the main unit 2 of the headset and connecting member 9 secured therein is fixed in the acoustic meatus.

In order not to run the risk that the main unit 2 of the headset, in the embodiment according to Fig. 6, comes out of position on depression of the PTT button 6, it is important that the PTT button and sound-reproducing element 11 are in register or in line with one another, on opposing sides of the main unit 2. As a result, a depression of the PTT button will realise an improvement of the fixing of the sound-reproducing element 11 in the acoustic meatus of the user rather than an oblique displacement.

The connecting member 9 has, according to Fig. 6, contacts 12 on its rear side or inside, the contacts being designed for cooperation with the contacts 10 which are disposed in the connecting device 8. Further, the design is such that the contact member 9 may be slid into the connecting device 8 and remain in position there reliably so that there is no risk that the main unit 2 of the headset falls off.

In the embodiment illustrated in Fig. 6, there is no fixing clip 7 necessary, since the main unit 2 is fixed direct in the ear of the user.

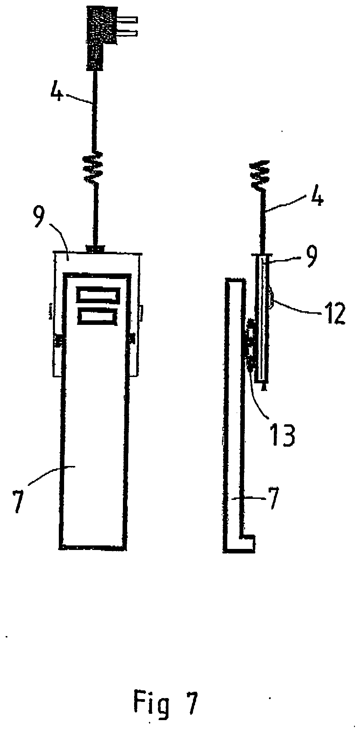

Fig. 7 shows one example of a contact member 9, for example of the type which is also apparent from Fig. 5 and which has a lead 4 with an analog sound signal. The contact member 9 has the fixing clip 7 fixed via a spring pivot device 13 in order to permit fixing of the main unit 2 on an item of the user's clothing. It will further be apparent from the Drawing that the connecting member 9 has contacts 12 for connection of the lead 4 to the above mentioned contacts 10 of the main unit.

In the upper end of the lead 4 in Fig. 7, there is disposed a connecting contact which may designed for cooperation with some sound-reproducing device of suitable type, for example the ear bud in Fig. 1 or the hearing protector 5 in Fig. 2. The appearance of the contact device in the end of the lead 4 may naturally vary.

## Claims

1. A communication device comprising a cell- or mobile telephone and a hunting radio, both the mobile telephone and the hunting radio being provided with units for Bluetooth communication or other wireless communication, and a headset (1, 2), which is provided with operating means (6, 14) for controlling both, the headset (1, 2) is equipped for Bluetooth communication or other wireless communication with both the mobile telephone and the hunting radio **characterised in that** the mobile telephone and the hunting radio are used simultaneously and that the operating means comprise a first operating device (6) for operating the hunting radio, and a second operating member (14) for operating the mobile telephone.

2. The communication device as claimed in Claim 1, **characterised in that** the headset (1, 2) has a connecting device (8) for fixing a corresponding connecting member (9), which has a lead communication (4) with a sound-reproducing element (3, 5).

3. The communication device as claimed in Claim 2, **characterised in that** it includes a number of alternative connecting members (9).

4. The communication device as claimed in Claim 2, **characterised in that** the connecting member (9) has a fixing clip (7) for fixing the headset (2) on, for example, an item of clothing; and that the sound-reproducing element (3, 5) is disposed a distance from the connecting member (9).

5. The communication device as claimed in Claim 2, **characterised in that** the sound-reproducing element is a loudspeaker (11) for insertion in the user's acoustic meatus, the loudspeaker being disposed on the connecting member (9); and that the operating means (6) of the headset for controlling the hunting radio is located, on activation of the hunting radio, to realise impression of the loudspeaker in the acoustic meatus.

6. The communication device as claimed in Claim 5, **characterised in that** the operating means (14) for the hunting radio is positioned in line with the sound-reproducing element (11) on opposing sides of the main unit (2).

7. The communication device as claimed in any of Claims 2 to 4, **characterised in that** the sound-reproducing element is disposed interiorly in a hearing protector (5) including ear protecting cups or hoods.

## Patentansprüche

1. Kommunikationsvorrichtung, die ein Handy oder Mobiltelefon und ein Jagdradio, wobei sowohl das Mobiltelefon als auch das Jagdradio mit Einheiten für eine Bluetooth-Kommunikation oder eine andere drahtlose Kommunikation ausgestattet sind, und ein Headset (1, 2), das mit Betriebsmitteln (6, 14) zum Steuern von beiden ausgestattet ist, umfasst, wobei das Headset (1, 2) für eine Bluetooth-Kommunikation oder eine andere drahtlose Kommunikation mit sowohl dem Mobiltelefon als auch dem Jagdradio ausgerüstet ist, **dadurch gekennzeichnet, dass** das Mobiltelefon und das Jagdradio gleichzeitig verwendet werden und die Betriebsmittel eine erste Betriebsvorrichtung (6) zum Betreiben des Jagdradios und ein zweites Betriebsglied (14) zum Betreiben des Mobiltelefons umfassen.

2. Kommunikationsvorrichtung nach Anspruch 1, **dadurch gekennzeichnet, dass** das Headset (1, 2) eine Verbindungsvorrichtung (8) aufweist, um ein entsprechendes Verbindungsglied (9), das eine Leitungskommunikation (4) mit einem Tonwiedergabeelement (3, 5) aufweist, zu befestigen.

3. Kommunikationsvorrichtung nach Anspruch 2, **dadurch gekennzeichnet, dass** sie eine Anzahl von alternativen Verbindungsgliedern (9) beinhaltet.

4. Kommunikationsvorrichtung nach Anspruch 2, **dadurch gekennzeichnet, dass** das Verbindungsglied (9) eine Befestigungsklammer (7) aufweist, um das Headset (2) zum Beispiel an einem Kleidungsstück zu befestigen, und das Tonwiedergabeelement (3, 5) mit einem Abstand vom Verbindungsglied (9) angeordnet ist.

5. Kommunikationsvorrichtung nach Anspruch 2, **dadurch gekennzeichnet, dass** das Tonwiedergabeelement ein Lautsprecher (11) ist, der in den äußeren Gehörgang des Benutzers eingeführt werden soll, wobei der Lautsprecher am Verbindungsglied (9) angeordnet ist; und sich die Betriebsmittel (6) des Headsets zum Steuern des Jagdradios derart befinden, dass sie bei der Aktivierung des Jagdradios einen Eindruck des Lautsprechers im äußeren Gehörgang verwirklichen.

6. Kommunikationsvorrichtung nach Anspruch 5, **dadurch gekennzeichnet, dass** die Betriebsmittel (14) für das Jagdradio in einer Linie mit dem Tonwiedergabeelement (11) an gegenüberliegenden Seiten der Haupteinheit (2) positioniert sind.

7. Kommunikationsvorrichtung nach einem der Ansprüche 2 bis 4, **dadurch gekennzeichnet, dass** das Tonwiedergabeelement intern in einem Gehörschutz (5) einschließlich Ohrschutzmuscheln oder -hauben angeordnet ist.

## Revendications

1. Dispositif de communication comprenant un téléphone cellulaire ou mobile et une radio de recherche de ligne, le téléphone mobile et la radio de recherche de ligne étant tous les deux pourvus d'unités pour communication Bluetooth ou autre communication sans fil, et un casque microphone (1, 2), qui est pourvu de moyens de commande (6, 14) pour commander les deux, le casque microphone (1, 2) est équipé pour communication Bluetooth ou autre communication sans fil avec le téléphone mobile et la radio de recherche de ligne, **caractérisé en ce que** le téléphone mobile et la radio de recherche de ligne sont utilisés simultanément et que les moyens de commande comprennent un premier dispositif de commande (6) pour commander la radio de recherche de ligne, et un second organe de commande (14) pour commander le téléphone mobile.

2. Dispositif de communication selon la revendication 1, **caractérisé en ce que** le casque microphone (1, 2) possède un dispositif de connexion (8) pour fixer un organe de connexion correspondant (9), qui possède une communication à fil (4) avec un élément de reproduction sonore (3, 5).

3. Dispositif de communication selon la revendication 2, **caractérisé en ce qu'**il inclut un nombre d'autres organes de connexion (9).

4. Dispositif de communication selon la revendication 2, **caractérisé en ce que** l'organe de connexion (9) possède une pince de fixation (7) pour fixer le casque microphone (2) sur, par exemple, un vêtement ; et que l'élément de reproduction sonore (3, 5) est disposé à une distance de l'organe de connexion (9).

5. Dispositif de communication selon la revendication 2, **caractérisé en ce que** l'élément de reproduction sonore est un haut-parleur (11) pour insertion dans le méat acoustique de l'utilisateur, le haut-parleur étant disposé sur l'organe de connexion (9) ; et que le moyen de commande (6) du casque microphone pour commander la radio de recherche de ligne est positionné, lors de l'activation de la radio de recherche de ligne, pour réaliser l'impression du haut-parleur dans le méat acoustique.

6. Dispositif de communication selon la revendication 5, **caractérisé en ce que** le moyen de commande (14) pour la radio de recherche de ligne est positionné en ligne avec l'élément de reproduction sonore (11) sur des côtés opposés de l'unité principale (2).

7. Dispositif de communication selon l'une quelconque des revendications 2 à 4, **caractérisé en ce que** l'élément de reproduction sonore est disposé intérieurement dans un protecteur auditif (5) incluant des coquilles de protection d'oreille ou protecteurs d'oreille.
